# EUROPEAN PATENT APPLICATION

(11) **EP 3 441 179 A1**
(43) Date of publication of application: **13.02.2019**
(21) Application number: 17185259.3
(22) Date of filing: 08.08.2017
(51) Int. Cl.: B23K 35/02, B26F 3/12

(54) **METHODS AND DEVICES FOR SHAPING A FIBER CUSHION, AND SHAPED FIBER CUSHION**

(71) Applicant: Schukra Gerätebau GmbH, 2560 Berndorf (AT)
(72) Inventor: STRÜMPF, Martin, 7221 Marz (AT); RIEGER, Philip, 2542 Kottingbrunn (AT)
(74) Representative: Banzer, Hans-Jörg

(57) **Abstract**

Methods (10) and devices (30) for shaping a fiber cushion (21) are provided, which fiber cushion (21) is formed from a loose fiber material. The method (10) comprises heating (13) a wire (33); and shaping (14) the fiber cushion (21) by guiding at least a section of the heated wire (33) through the fiber cushion (21). The device comprises a wire (33); and heating means (33a) configured to heat up (13) the wire (33). The heated wire (33) is configured to shape the fiber cushion (21) by guiding at least a section of the heated wire (33) through the fiber cushion (21). Additionally, a shaped fiber cushion (20) produced by the method (10) for shaping a fiber cushion (21) is provided.

## Description

### FIELD OF THE INVENTION

The invention relates to methods and devices for shaping a fiber cushion, and to a shaped fiber cushion produced by such methods. Various embodiments relate in particular to methods and devices for shaping of such fiber cushions which are formed from a loose fiber material.

### BACKGROUND OF THE INVENTION

Foams, such as polyurethane (PU) foams, are widely used as fabric backings for seats, such as for vehicle interior materials in the transportation industry. The foams are adhered to the backs of textile face materials. These foam backed composites have a cushion effect which can offer comfort or a luxurious feel in contact areas.

There are drawbacks to using polyurethane foam as cushioning material for seats. For example, the polyurethane foam backed material can emit volatile materials which contribute to 'fogging' of vehicle or housing interiors, and the foam itself may oxidize over time leading to a color change and material degradation / loss of properties in the material. Recyclability is also an issue which has to be addressed.

In this context, one class of materials which has received attention is nonwovens, for example synthetic fiber nonwovens (e.g. polyester, polyamide, polyolefin). These materials can provide a suitable backing to many face fabrics and provides cushion properties similar to the ones of foam materials at similar costs. For example, EP 2 417 876 discloses fiber cushions comprising heat-treated nonwovens, in particular a seat cushion body and a method of producing said seat cushion body. The fiber cushion is formed from a loose fiber material.

However, a pre-integration of trim channels, holes or cuts within the mold of a fiber cushion, as in the case of foam cushions, is limited in position and size. This is due to the specific method of producing said fiber cushion, which entails turbulances behind every undercut of the air stream passing through the mold. These would result in spatial zones having lower or different fiber densities, holes, or inhomogeneities.

At the same time, post-processing methods for foam cushions are not generally applicable to fiber cushions either, as foam cushions and fiber cushions have quite different material properties which need to be taken account of in order to obtain shaped fiber cushions of satisfactory quality and quantity.

### BRIEF SUMMARY OF THE INVENTION

In view of the above, there is a continued need in the art for methods and devices which address some of the above needs. There is in particular a need in the art for methods and devices which provide similar post-processing capabilities for fiber cushions as in the case of conventional foam cushions.

These underlying objects of the invention are each solved by a method and a device for shaping a fiber cushion, as defined by the independent claims. Preferred embodiments of the invention are set forth in the dependent claims.

According to a first aspect of the invention, a method for shaping a fiber cushion is provided. The fiber cushion is formed from a loose fiber material. The method comprises heating a wire; and shaping the fiber cushion by guiding at least a section of the heated wire through the fiber cushion.

The term "wire" as used herein refers to any metal article which can absorb heat, withstand a resulting temperature and a backpressure by the fiber material of the fiber cushion without significant deformation when being guided through the fiber cushion, and is suitable for continuous production. Suitable wire shapes comprise flexible threads or slender rods, for example.

Advantageously, the method enables integration of such trim channels, holes, cuts and the like into a fiber cushion which would result in undercuts if respective arrangements for integration of the same would be made within the mold of the fiber cushion.

According to an embodiment, the section of the wire is loop-shaped.

The term "loop-shaped" as used herein refers to any curving or doubling of the wire so as to form a partly open curve.

Advantageously, a wire loop may define any desirable area enclosed by the wire to be removed from the fiber cushion along a trajectory described by the wire within the fiber cushion by guiding at least a section of the heated wire through the fiber cushion.

For example, a trajectory may spatially extend across the whole fiber cushion, resulting in a trim channel or cut, or as well be confined to a rotation of the heated wire in place in a particular section of the fiber cushion, resulting in a blind hole.

Advantageously, very thin trim channels may be formed if the loop-shaped section of the wire is guided through the fiber cushion in a direction parallel to a plane defined by a loop formed by the wire. For example, trim channels of about 1 mm width may be realized. By contrast, in case of foam cushions, a width of trim channels is limited by a clip/wire fixing system to be attached to the fiber cushion, in particular limited to 8mm or more.

Advantageously, very thin trim channels enable a much more precise positioning of seams of a cover to be attached to the fiber cushion.

According to an embodiment, the wire comprises Wolfram.

Advantageously, Wolfram can be heated to very high temperatures has a temperature dependence which provides a good connection of a temperature of the wire and its temperature-dependent electric conductivity which can be measured accurately in a contactless manner. This eliminates a need for measuring the temperature of the wire by an additional sensor, which proves difficult due to a potential thermal removal by the additional sensor in proximity to the wire, and as well in view of a small diameter of the wire.

According to an embodiment, the wire comprises a ceramic coating.

The term "ceramic" as used herein refers to any material made from a heat-treated nonmetallic mineral.

The term "ceramic coating" as used herein refers to ceramic material of any shape and thickness which seamlessly encloses some other article, for example a metallic wire or bar. In particular cases, the ceramic coating may even account for most of a compound that is arranged for being guided through the fiber cushion. In such cases, the ceramic coating provides for stiffness / non-expansion, heat resistance and long service life, while the wire provides for heating.

Advantageously, ceramics may prevent other materials, such as metallic wires, in particular wires comprising Wolfram, from oxidation by ambient air.

According to an embodiment, the method further comprises supplying a blanket gas or a gas mixture comprising a blanket gas to the wire.

According to an embodiment, the blanket gas comprises nitrogen.

The term "blanket gas" as used herein refers to any gas which does not undergo chemical reactions under a set of given conditions. Blanket gases are used generally to avoid unwanted chemical reactions degrading a sample. In particular, blanket gases, for example inert gases, may prevent a heated metallic wire from oxidation by ambient air. Different wire materials may require different blanket gases.

According to an embodiment, the wire has a circular cross-section.

According to an embodiment, the wire has a teardrop-shaped cross-section.

The term "teardrop-shaped" as used herein refers to any shape which, starting from a generally rotation symmetric shape, is reinforced in an edge section facing away from an expected force impingement. In particular, such a reinforced shape may resemble a teardrop, which comprises a tapered protrusion extending from and reinforcing a generally circular body.

Advantageously, a wire having such a reinforced cross-sectional shape is more resistant to bending of the wire.

According to an embodiment, the wire has a smallest cross-sectional diameter in a range of 0,4 - 1,6 mm, preferably 0,8 to 1 mm.

For example, a particular choice as regards the smallest cross-sectional diameter of the wire depends on requirements such as shaping speed, a material density, melting and vaporisation characteristics of the fiber cushion, an effective contact area of the wire with the fiber material in a shaping direction, a shape/contour of an area outlined by the wire, a wire material, and a wire diameter.

Advantageously, a wire having such a cross-sectional dimension provides a practical tradeoff between heat generation, which increases with diameter, and wire bending, which coincides with decreasing diameter.

Advantageously, a formation of trim channels is enabled whose width substantially corresponds to the smallest cross-sectional diamenter of the wire.

According to an embodiment, the method further comprises supplying a means selected from the group consisting of a heat-dissipating bushing, compressed air, or a blanket gas to a surface of the wire not in contact with the fiber cushion.

The term "heat-dissipating bushing" as used herein refers to any arrangement capable of surrounding said surface of the wire and improving a heat dissipation of the wire at said surface.

Advantageously, a wire being supplied with such a heat-dissipating bushing at a surface of the wire not in contact with the fiber cushion is more resistant to bending of the wire owing to less temperature of the wire and due to external mechanical reinforcement of the wire by the bushing.

Advantageously, a wire being supplied with compressed air or a blanket gas at a surface of the wire not in contact with the fiber cushion is more resistant to bending of the wire owing to less temperature of the wire.

According to an embodiment, heating the wire comprises supplying electric energy to the wire.

In particular, the feature of supplying electric energy to the wire integrates well with the above-mentioned feature of the loop-shaped section of the wire.

Alternatively or additionally, heating the wire may also comprise supplying inductive electromagnetic energy to the wire, or similar, comparable thermal energy.

According to an embodiment, heating the wire comprises maintaining a constant temperature of the wire.

Advantageously, maintaining a constant temperature of the wire provides the same shaping quality at every section of the fiber cushion being shaped.

According to an embodiment, heating the wire comprises maintaining a constant temperature of the wire in a range of 600 to 1.200 °C.

Advantageously, a constant temperature of the wire in a range of 600 to 1.200 °C provides an excellent shaping quality in relation with fiber cushions being formed from a loose fiber material and heat-treated.

In particular, the above-identified temperature range ensures that the wire is hot enough to melt, vaporise or displace the fiber material upon contact with or in proximity of the wire.

In particular, the above-identified temperature range provides a good tradeoff between the fiber material being stuck on the wire, and the wire removing more fiber material than desired.

According to an embodiment, heating the wire comprises heating the wire depending on a velocity by which the wire is guided through the fiber cushion.

Advantageously, heating the wire depending on a velocity by which the wire is guided through the fiber cushion provides enables automation of shaping of fiber cushions on quality and throughput levels which are needed for exploitation on industrial scale.

In particular, a shaping speed generally depends on various characteristics of the fiber cushion and the wire loop, respectively. As for the fiber cushion, a material density and melting and vaporisation characteristics influence the shaping speed. Regarding the wire loop, an effective contact area with the fiber material in a shaping direction, a shape/contour of the area defined within the wire loop, a wire material, and a wire diameter are decisive.

According to a second aspect of the invention, a shaped fiber cushion is provided, which shaped fiber cushion is produced by a method for shaping a fiber cushion according to various embodiments.

According to a third aspect of the invention, a device for shaping a fiber cushion is provided. The fiber cushion is formed from a loose fiber material. The device comprises a wire; and heating means configured to heat up the wire. The heated wire is configured to shape the fiber cushion by guiding at least a section of the heated wire through the fiber cushion.

According to an embodiment, the device is configured to perform a method for shaping a fiber cushion according to various embodiments.

Advantageously, the technical effects and advantages described above in relation with the method for shaping a fiber cushion equally apply to the device for shaping a fiber cushion having corresponding features.

### BRIEF DESCRIPTION OF THE DRAWINGS

Embodiments of the invention will be described with reference to the accompanying drawings, in which the same or similar reference numerals designate the same or similar elements.
Figs. 1 - 4 are a flow diagrams illustrating methods for shaping a fiber cushion according to various embodiments.
Figs. 5 - 10 and Figs. 13 - 18 are schematic diagrams further illustrating the methods for shaping a fiber cushion according to various embodiments.
Fig. 11 is a schematic diagram illustrating a device for shaping a fiber cushion according to an embodiment.
Fig. 12 is a schematic diagram illustrating a shaped fiber cushion according to an embodiment.

### DETAILED DESCRIPTION OF THE EMBODIMENTS

Exemplary embodiments of the invention will now be described with reference to the drawings.

While some embodiments will be described in the context of specific fields of application, the embodiments are not limited to this field of application. Further, the features of the various embodiments may be combined with each other unless specifically stated otherwise.

The elements illustrated in the schematic drawings are not necessarily shown to scale. Rather, the various elements are represented such that their function and general purpose become apparent to a person skilled in the art.

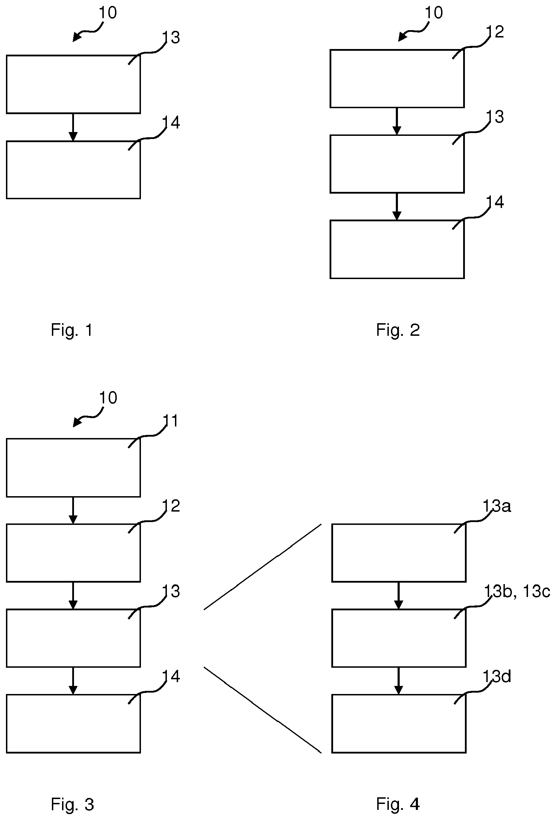

From Fig. 4, a pair of lines extends towards the previous Fig. 3 indicating that the method step framed by the pair of lines in Fig. 3 may comprise the method steps framed by the pair of lines in Fig. 4.

Figs. 1 - 4 are a flow diagrams illustrating methods 10 for shaping a fiber cushion 21 according to various embodiments.

Making reference to Fig. 1, a method 10 for shaping a fiber cushion 21 is shown. The fiber cushion 21 is formed from a loose fiber material. The method 10 comprises two steps.

In a first step, a wire 33 is heated 13, and in a second step, the fiber cushion 21 is shaped 14 by guiding at least a section of the heated wire 33 through the fiber cushion 21.

With respect to method 10 of Fig. 1, method 10 of Fig. 2 additionally comprises the step of supplying 12 a blanket gas to the wire 33 before heating 13 the wire.

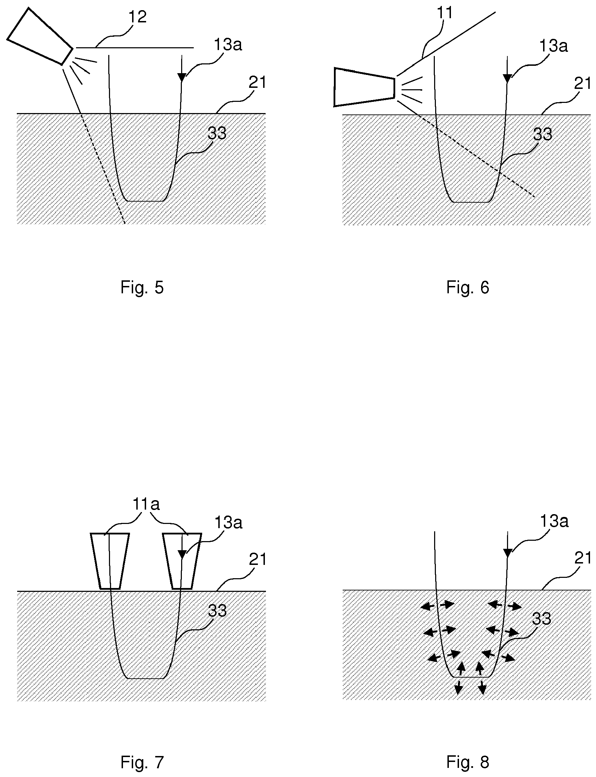

With respect to method 10 of Fig. 2, method 10 of Fig. 3 additionally comprises the step of supplying 11 a heat dissipating means 11 a - 11 c to a surface of the wire 33 not in contact with the fiber cushion 21. Details on said heat dissipating means 11a - 11c are illustrated in Figs. 6 and 7 below.

Making reference to Fig. 4, the step of heating 13 the wire 33 of method 10 further comprises supplying 13a electric energy to the wire 33, maintaining 13b a constant temperature of the wire 33, and in particular maintaining 13c a constant temperature of the wire 33 in a range of 600 to 1.200 °C.

In addition, the step of heating 13 the wire 33 of method 10 comprises heating 13d the wire 33 depending on a velocity by which the wire 33 is guided through the fiber cushion 21.

Figs. 5 - 10 and Figs. 13 - 18 are schematic diagrams further illustrating the methods 10 for shaping a fiber cushion 21 according to various embodiments.

With reference to Fig. 5, a wire 33 is shown a section of which is loop-shaped and extends through the fiber cushion 21. The wire 33 is heated 13 by supplying 13a electric energy to the wire 33. A blanket gas is supplied 12 to the wire 33. In particular, the blanket gas may comprise nitrogen, for example.

Making reference to Figs. 6 - 7, a means 11a - 11c is supplied to a surface of the wire 33 not in contact with the fiber cushion 21. Fig. 6 shows supplying 11 compressed air 11 b or a blanket gas 11c to said surface of the wire 33, while in Fig. 7, said surface of the wire 33 is surrounded by a heat-dissipating bushing 11a.

In Fig. 8, a plurality of arrows shows a heat dissipation from the wire into the fiber material of the fiber cushion 21. The step of heating 13 the wire 33 of method 50 comprises maintaining 13b a constant temperature of the wire 33, in particular maintaining 13c a constant temperature of the wire 33 in a range of 600 to 1.200 °C. This is achieved by heating 13 the wire 33 by supplying 13a an appropriate amount of electric energy to the wire 33.

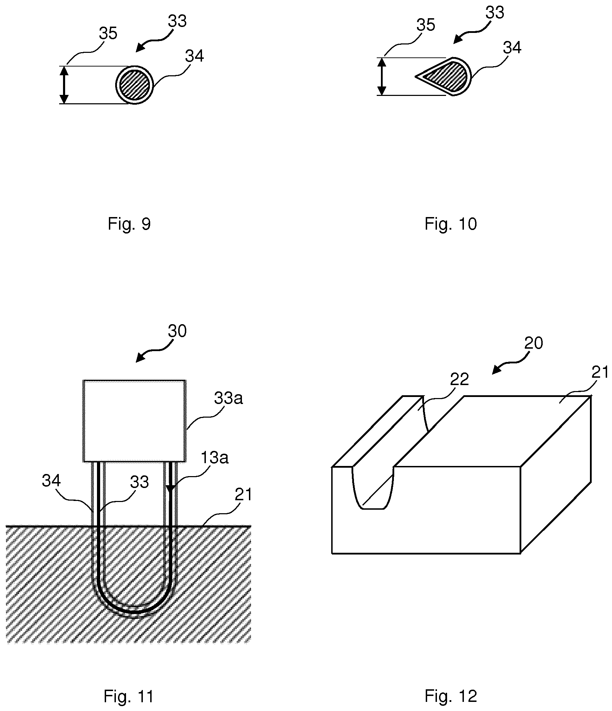

Figs. 9 - 10 show cross-sectional views of wires 33. The wire of Fig. 9 has a circular cross-section, while the cross-section of the wire of Fig. 10 is teardrop-shaped. In both cases, the wire 33 has a smallest cross-sectional diameter 35 in a range of 0,4 - 1,6 mm, or preferably 0,8 to 1 mm.

The wire 33 may comprise Wolfram. As such, the wire 33 is subject to oxidation by ambient air. Accordingly, the wires 33 of Figs. 9 - 10 respectively comprise a ceramic coating 34 in order to prevent oxidation.

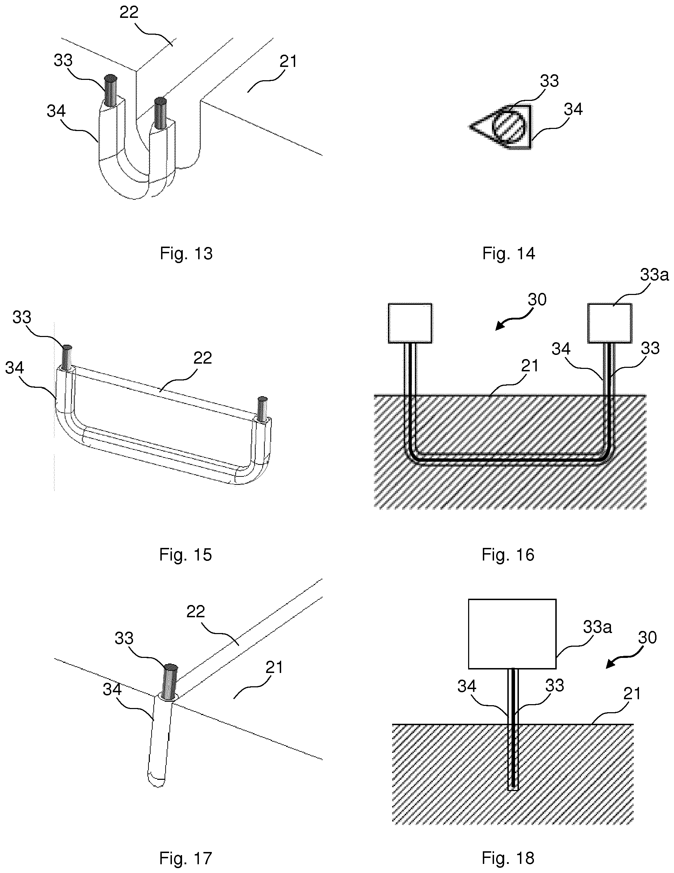

Figs. 13 and 14 show perspective and cross-sectional views of a wire 33 for shaping 14 the fiber cushion 21. The wire 33 has a teardrop-shaped cross-section, which contrary to Fig. 10 is defined by the ceramic coating 34, and is loop-shaped as discussed in connection with Fig. 5. Accordingly, wire 33 of Figs. 13 and 14 particularly enables shaping of so-called trim channels 22 into the fiber cushion 21 whose width corresponds to a width of the rounded section of the wire loop.

Figs. 15 and 16 show perspective and side views of a wire 33 for shaping 14 the fiber cushion 21. The wire 33 also has a ceramic coating 34, which has a circular-shaped cross-section as discussed in connection with Fig. 9, and is loop-shaped as just discussed. In contrast to the wire 33 of Figs. 13 and 14, a width of the loop of wire 33 of Figs. 15 and 16 is larger than twice a radius of the rounded sections of wire 33. Particularly, wire 33 of Figs. 15 and 16 enables stamping of flat recesses 22 into the fiber cushion 21.

Figs. 17 and 18 show perspective and side views of an alternative embodiment of wire 33 extending through the fiber cushion 21. In contrast to wires 33 of Figs. 13-16, the wire 33 of Figs. 17 and 18 has a rod or bar shape. The bar-shaped wire 33 is therefore particularly suitable for shaping of narrow circular recesses and narrow channels within the fiber cushion 21.

Fig. 11 is a schematic diagram illustrating a device 30 for shaping a fiber cushion 21 according to an embodiment.

The device 30 is suitable for shaping fiber cushions 21 being formed from a loose fiber material. The device 30 comprises a wire 33 a section of which is loop-shaped; and heating means 33a configured to heat up 13 the wire 33, in particular by supplying 13a electric energy to the wire 33. At least a section of the so heated wire 33 is guided through the fiber cushion 21, thus shaping 14 the fiber cushion 21.

Based on this basic embodiment, the device 30 is configured to perform the method 10 for shaping a fiber cushion 21 according to various embodiments.

Fig. 12 is a schematic diagram illustrating a shaped fiber cushion 20 according to an embodiment.

The shaped fiber cushion 20 has an exemplary trim channel 22 which has been removed from a fiber cushion 21 by a method 10 for shaping a fiber cushion 21 according to various embodiments, thus representing a direct product of the method 10.

While methods and devices according to various embodiments have been described, various modifications may be implemented in other embodiments.

For illustration, the method 10 for shaping a fiber cushion 21 does not require a specific order of steps 13a - 13c as shown in Fig. 4. In particular, these steps may be performed simultaneously or quasi-simultaneously in an automated manner by a controller means being configured to control the heating means 33a of the device 30 and to control the shaping of the fiber cushion by directing the heating means 33a to guide at least a section of the heated wire through the fiber cushion.

## Claims

1. A method (10) for shaping a fiber cushion (21), the fiber cushion (21) being formed from a loose fiber material, the method (10) comprising
- heating (13) a wire (33); and
- shaping (14) the fiber cushion (21) by guiding at least a section of the heated wire (33) through the fiber cushion (21).

2. The method (10) of claim 1,
wherein the section of the wire (33) is loop-shaped.

3. The method (10) of claim 1 or claim 2,
wherein the wire (33) comprises Wolfram.

4. The method (10) of any one of claims 1 - 3,
wherein the wire (33) comprises a ceramic coating (34).

5. The method (10) of any one of claims 1 - 3, further comprising
- supplying (12) an blanket gas or a gas mixture comprising a blanket gas to the wire (33).

6. The method (10) of claim 5,
wherein the blanket gas comprises nitrogen.

7. The method (10) of any one of claims 1 - 6,
wherein the wire (33) has one of a circular cross-section or a teardrop-shaped cross-section.

8. The method (10) of claim 7,
wherein the wire (33) has a smallest cross-sectional diameter (35) in a range of 0,4 - 1,6 mm, preferably 0,8 to 1 mm.

9. The method (10) of any one of the preceding claims, further comprising
- supplying (11) a means selected from the group consisting of a heat-dissipating bushing (11 a), compressed air (11 b), or a blanket gas (11c) to a surface of the wire (33) not in contact with the fiber cushion (21).

10. The method (10) of any one of the preceding claims,
wherein heating (13) the wire (33) comprises supplying (13a) electric energy to the wire (33).

11. The method (10) of any one of the preceding claims,
wherein heating (13) the wire (33) comprises maintaining (13b) a constant temperature of the wire (33), preferably in a range of 600 to 1.200°C.

12. The method (10) of claim 11,
wherein heating (13) the wire (33) comprises heating (13d) the wire (33) depending on a velocity by which the wire (33) is guided through the fiber cushion (21).

13. A shaped fiber cushion (20) produced by a method (10) for shaping a fiber cushion (21) of any one of claims 1 - 12.

14. A device (30) for shaping a fiber cushion (21), the fiber cushion (21) being formed from a loose fiber material, the device (30) comprising
- a wire (33);
- heating means (33a) configured to heat up (13) the wire (33); and
wherein the heated wire (33) is configured to shape the fiber cushion (21) by guiding at least a section of the heated wire (33) through the fiber cushion (21).

15. The device (30) of claim 14,
wherein the device (30) is configured to perform a method (10) for shaping a fiber cushion (21) of any one of claims 1 - 12.
